(19) Europäisches Patentamt / European Patent Office / Office européen des brevets

(11) **EP 1 802 481 B1**

(12) **EUROPÄISCHE PATENTSCHRIFT**

(45) Veröffentlichungstag und Bekanntmachung des Hinweises auf die Patenterteilung:
**21.07.2010   Patentblatt 2010/29**

(21) Anmeldenummer: **05794433.2**

(22) Anmeldetag: **13.10.2005**

(51) Int Cl.:
*B60K 23/04* (2006.01)          *B60K 28/16* (2006.01)
*B60T 8/32* (2006.01)

(86) Internationale Anmeldenummer:
**PCT/EP2005/055236**

(87) Internationale Veröffentlichungsnummer:
**WO 2006/053805 (26.05.2006 Gazette 2006/21)**

(54) **VERFAHREN UND VORRICHTUNG ZUM STEUERN DES SPERRGRADES EINER ELEKTRONISCH STEUERBAREN DIFFERENZIALSPERRE**

METHOD AND DEVICE FOR CONTROLLING THE DEGREE OF LOCKING OF AN ELECTRONICALLY CONTROLLABLE DIFFERENTIAL LOCK

PROCEDE ET DISPOSITIF POUR COMMANDER LE DEGRE DE BLOCAGE D'UN SYSTEME DE BLOCAGE DE DIFFERENTIEL A COMMANDE ELECTRONIQUE

(84) Benannte Vertragsstaaten:
**DE FR HU IT**

(30) Priorität: **14.10.2004   DE 102004050307**
**13.10.2005   DE 102005049396**

(43) Veröffentlichungstag der Anmeldung:
**04.07.2007   Patentblatt 2007/27**

(73) Patentinhaber: **Continental Teves AG & Co. oHG**
**60488 Frankfurt am Main (DE)**

(72) Erfinder:
• **BAUER, Roger**
  **60326 Frankfurt (DE)**
• **RASTE, Thomas**
  **61440 Oberursel (DE)**

(56) Entgegenhaltungen:
| | |
|---|---|
| **EP-A- 1 464 564** | **DE-A1- 3 714 330** |
| **DE-A1- 4 030 653** | **DE-A1- 10 245 035** |
| **DE-A1- 10 338 656** | **DE-A1- 19 515 051** |
| **US-A1- 2003 125 148** | **US-B1- 6 436 002** |

**Beschreibung**

Die Erfindung betrifft ein Verfahren zum Steuern des Sperrgrades einer elektronisch steuerbaren Differenzialsperre in einer angetriebenen Achse eines Fahrzeugs.

Die Erfindung betrifft zudem eine Vorrichtung zur Durchführung des Verfahrens.

Elektronische Differenzialsperren verfügen üblicherweise über Kupplungen, mit denen das offene Differenzial einer angetriebenen Achse eines Fahrzeugs gesperrt werden kann. Der Sperrgrad wird mit Hilfe einer elektronischen Regelung ermittelt, um die Traktion und die Fahrstabilität eines Fahrzeugs zu verbessern.

Aus der DE 102 45 035 A1 ist ein Verfahren bekannt, bei dem aus Fahrgeschwindigkeit, Querbeschleunigung und dem aktuellen Lenkwinkel ein zu der Fahrgeschwindigkeit und der Querbeschleunigung zugehöriger Kennfeldlenkwinkel ermittelt wird, wobei eine Abweichung des aktuellen Lenkwinkels vom Kennfeldlenkwinkel zur Veränderung der Quersperre in variablen Schritten erfolgt.

Die DE 195 15 051 A1 offenbart ein ESP-System, das eine Regelung auf der Basis der Schräglaufwinkeldifferenz vorsieht. Bei der bekannten Regelung ist eine vereinfachte Ermittlung der Sollgiergeschwindigkeit auf der Basis der Schräglaufwinkeldifferenz dazu vorgesehen, dass Bremseneingriffe oder Eingriffe in das Motormoment - also ESP Eingriffe - vorgenommen werden.

Ein Verfahren der eingangs genannten Art ist bereits aus der Patentschrift DD 294 078 A5 bekannt. Bei dem bekannten Verfahren wird eine Radgeschwindigkeitsdifferenz zwischen den Rädern an der angetriebenen Achse einem geschwindigkeitsabhängigen Sollwert nachgeregelt, um den Einfluss von Störgrößen, wie beispielsweise einer Veränderung der Reibwerte der Fahrbahn oder einer Veränderung der Radlast, auszugleichen.

Dieses Verfahren hat jedoch den Nachteil, dass der Fahrzustand des Fahrzeugs nur ungenügend bei der Ansteuerung der Differenzialsperre berücksichtigt wird. So kann es beispielsweise während der Fahrt durch eine Kurve in einer Übersteuersituation aufgrund einer verringerten Radlast des kurveninneren Antriebsrades zu einer erheblichen Raddrehzahldifferenz zwischen den Antriebsrädern kommen. Wird diese durch eine Erhöhung des Sperrgrades der elektronischen Differenzialsperre ausgeregelt, so erhöht sich das auf das kurvenäußere Rad übertragene Antriebsmoment. In der Folge kann es zu einem Durchdrehen des kurvenäußeren Antriebsrades kommen, was ein Ausbrechen des Fahrzeugs zur Folge hat.

Es ist daher eine Aufgabe der vorliegenden Erfindung, die Ansteuerung einer elektronischen Differenzialsperre in kritischen Fahrsituationen zu verbessern, um so die Fahrzeugsicherheit zu erhöhen.

Erfindungsgemäß wird diese Aufgabe durch ein Verfahren mit den Merkmalen des Patentanspruchs 1 sowie durch eine Vorrichtung mit den Merkmalen des Patentanspruchs 19 gelöst. Demgemäß ist es vorgesehen, dass ein Verfahren der eingangs genannten Art so durchgeführt wird, dass anhand von Fahrzustandsgrößen, welche wenigstens eine Schräglaufwinkeldifferenz in einer Links- und/oder einer Rechtskurve umfassen, eine Übersteuersituation oder eine Untersteuersituation und anhand von Ausgangssignalen eines ESP-Systems ein ESP-Eingriff erkannt wird und die Fahrpedalstellung ausgewertet wird. Die erkannten Situationen werden daraufhin bewertet, ob ein von Null verschiedener Sperrgrad in der Differenzialsperre eingestellt werden soll, und ob eine Steuerung des Sperrgrades der Differenzialsperre in Abhängigkeit von dem Ergebnis der Bewertung vorgenommen wird.

Ferner ist es vorgesehen, dass eine Vorrichtung zum Steuern eines Sperrgrades einer elektronisch steuerbaren Differenzialsperre in einer angetriebenen Achse eines Fahrzeugs so ausgestaltet wird, dass sie eine Regeleinheit, in der ein Sperrgrad der Differenzialsperre bestimmbar ist und eine Bewertungseinheit umfasst, in der eine Fahrsituation des Fahrzeugs erkennbar und daraufhin bewertbar ist, ob ein von Null verschiedener Sperrgrad der Differenzialsperre eingestellt werden soll, wobei mittels der Bewertungseinheit ein in der Regeleinheit ermittelter Sperrgrad einstellbar ist, wenn eine Bewertung der Fahrsituation ergibt, dass ein von Null verschiedener Sperrgrad der Differenzialsperre eingestellt werden soll.

Der Erfindung liegt dabei die Idee zugrunde, eine übergeordnete Regelung zur Ansteuerung einer elektronisch steuerbaren Differenzialsperre vorzusehen, bei welcher der Fahrzustand des Fahrzeugs zunächst daraufhin bewertet wird, ob ein von Null verschiedener Sperrgrad eingestellt werden soll, und die Ansteuerung der Differenzialsperre in Abhängigkeit von dem Ergebnis dieser Bewertung vorzunehmen.

Dieses Vorgehen beruht auf der Feststellung, dass unabhängig von der Raddrehzahldifferenz der Antriebsräder in bestimmten Fahrsituationen ein Sperrgrad von Null einzustellen ist, um die Fahrstabilität des Fahrzeugs zu erhöhen.

Neben einer Untersteuersituation betrifft dies vor allem bei heckgetriebenen Fahrzeugen insbesondere eine Situation, in welcher der Fahrer das Fahrzeug während einer Kurvenfahrt in Vorwärtsrichtung beschleunigt. Aufgrund der Fliehkräfte kommt es hierbei zu einer Verringerung der Radlast des kurveninneren Rades, dessen Radschlupf sich somit erhöht. Hierdurch verringert sich die Haftung des kurveninneren Rades, so dass die Seitenführungskraft, welche das Fahrzeug während der Kurvenfahrt auf seiner Bahn hält, nahezu vollständig an dem kurvenäußeren Rad aufgebracht werden muss.

Im Hinblick auf derartige Situationen ist es in einer besonders vorteilhaften Ausführungsform des erfindungsgemäßen Verfahrens und der erfindungsgemäßen Vorrichtung vorgesehen, dass eine Übersteuersituation oder eine Untersteuersituation anhand einer Schräglaufwinkeldifferenz zwischen den Schräglaufwinkeln von Vorderrädern und Hinterrädern des Fahrzeugs erkannt wird.

Dabei hat sich gezeigt, dass derartige Situationen, in denen ein Sperrgrad von Null in der elektronisch steuerbaren Differenzialsperre einzustellen ist, besonders zuverlässig anhand der Schräglaufwinkeldifferenz erkannt und bewertet werden können.

Zweckmäßigerweise ist es vorgesehen, dass die Schräglaufwinkeldifferenz $\Delta\alpha$ aus einem Lenkwinkel $\delta_{wheel}$ eines lenkbaren Rades des Fahrzeugs, einer Geschwindigkeit $v_{ref}$ des Fahrzeugs, einer Gierrate $\dot\psi$ des Fahrzeugs und einem Radstand $l$ des Fahrzeugs bestimmt wird, wobei gilt:

$$\Delta\alpha = -\delta_{wheel} + \frac{l}{v_{ref}}\dot\psi$$

Es handelt sich bei der Schräglaufwinkeldifferenz somit um eine den Fahrzustand des Fahrzeugs charakterisierende Größe, welche direkt aus Fahrzustandsgrößen, die mit Hilfe von Sensoren, wie beispielsweise Lenkwinkelsensoren zum Erfassen des Lenkwinkels, Gierratensensoren zum Erfassen der Gierrate und Raddrehzahlsensoren zum Ermitteln der Fahrzeuggeschwindigkeit, sowie aus einem Fahrzeugparametern - dem Radstand des Fahrzeugs - berechenbar ist.

In einer weiteren besonders bevorzugten Ausführungsform des erfindungsgemäßen Verfahrens und der erfindungsgemäßen Vorrichtung ist es vorgesehen, dass eine Übersteuersituation, in der ein Sperrgrad von Null in der Differenzialsperre eingestellt wird, erkannt wird, wenn die Schräglaufwinkeldifferenz bei Vorliegen einer positiven Gierrate des Fahrzeugs größer als ein vorgegebener positiver Übersteuerschwellenwert ist oder wenn die Schräglaufwinkeldifferenz bei Vorliegen einer negativen Gierrate des Fahrzeugs kleiner als ein vorgegebener negativer Übersteuerschwellenwert ist.

Vorzugsweise weisen der positive und der negative Übersteuerschwellenwert dabei den gleichen Betrag auf.

Ferner ist es dabei vorzugsweise vorgesehen, dass eine Übersteuersituation, in der ein Sperrgrad von Null in der Differenzialsperre eingestellt wird, erkannt wird, wenn zusätzlich ein Pedalweg, um den ein Fahrpedal des Fahrzeugs eingetreten ist, größer ist als ein vorgegebener Fahrpedalschwellenwert.

Darüber hinaus ist es vorzugsweise vorgesehen, dass eine Übersteuersituation, in der ein Sperrgrad von Null in der Differenzialsperre eingestellt wird, erkannt wird, wenn zusätzlich der Betrag des Lenkwinkels an dem lenkbaren Rad des Fahrzeugs größer als ein vorgegebener Lenkwinkelschwellenwert ist.

Weiterhin zeichnet sich eine besonders vorteilhafte Ausführungsform des erfindungsgemäßen Verfahrens und der erfindungsgemäßen Vorrichtung dadurch aus, dass eine Untersteuersituation, in der ein Sperrgrad von Null in der Differenzialsperre eingestellt wird, erkannt wird, wenn die Schräglaufwinkeldifferenz bei Vorliegen einer positiven Gierrate des Fahrzeugs kleiner als ein vorgegebener negativer Untersteuerschwellenwert ist oder wenn die Schräglaufwinkeldifferenz bei Vorliegen einer negativen Gierrate des Fahrzeugs größer als ein vorgegebener positiver Untersteuerschwellenwert ist.

Auch hierbei ist es vorzugsweise vorgesehen, dass der positive und der negative Untersteuerschwellenwert den gleichen Betrag aufweisen.

In einer weiteren vorteilhaften Ausführungsform des erfindungsgemäßen Verfahrens und der erfindungsgemäßen Vorrichtung ist es vorgesehen, dass eine Untersteuersituation, in der ein Sperrgrad von Null in der Differenzialsperre eingestellt wird, erkannt wird, wenn ein Betrag des Lenkwinkels an dem lenkbaren Rad des Fahrzeugs wenigstens um einen vorgegebenen Schwellenwert größer ist als ein Betrag eines berechneten Lenkwinkels $\delta_{calc}$.

Vorzugsweise ist es dabei vorgesehen, dass der Lenkwinkel $\delta_{calc}$ aus der Fahrzeuggeschwindigkeit $v_{ref}$, aus einer Querbeschleunigung $a_{lat}$ des Fahrzeugs, aus dem Radstand $l$ des Fahrzeugs sowie aus einem Übersteuerkoeffizienten $K$ berechnet wird, wobei gilt:

$$\delta_{calc} = \frac{l\dot\psi}{v_{ref}} + K \cdot a_{lat}$$

Es hat sich darüber hinaus gezeigt, dass sich die Stabilität des Fahrzustands des Fahrzeugs in bestimmten Übersteuersituationen durch das Einstellen eines von Null verschiedenen Sperrgrades in der Differenzialsperre verbessern lässt.

In einer weiteren bevorzugten Ausführungsform des erfindungsgemäßen Verfahrens und der erfindungsgemäßen Vorrichtung ist es daher vorgesehen, dass mittels einer Regeleinheit ein von Null verschiedener Sperrgrad berechnet wird und dass der von Null verschiedene Sperrgrad in der Differenzialsperre eingestellt wird, wenn eine Übersteuersituation erkannt wird und wenn die Schräglaufwinkeldifferenz bei Vorliegen einer positiven Gierrate des Fahrzeugs kleiner als der vorgegebene positive Übersteuerschwellenwert ist.

In einer ebenso bevorzugten Ausführungsform des erfindungsgemäßen Verfahrens und der erfindungsgemäßen Vorrichtung ist es vorgesehen, dass mittels der Regeleinheit ein von Null verschiedener Sperrgrad berechnet wird und dass der von Null verschiedene Sperrgrad in der Differenzialsperre eingestellt wird, wenn eine Übersteuersituation erkannt wird und wenn die Schräglaufwinkeldifferenz bei Vorliegen einer negativen Gierrate des Fahrzeugs größer als der vorgegebene negative Übersteuerschwellenwert ist.

Vorzugsweise ist es dabei vorgesehen, dass ein von Null verschiedener Sperrgrad in der elektronisch steuerbaren Differenzialsperre eingestellt wird, wenn zusätzlich der Betrag des Lenkwinkels an dem lenkbaren Rad des Fahrzeugs kleiner als der vorgegebene Lenkwinkelschwellenwert ist.

Vorzugsweise ist es ferner vorgesehen, dass ein von Null verschiedener Sperrgrad der elektronischen Differenzialsperre eingestellt wird, wenn zusätzlich der Pedalweg, um den das Fahrpedal des Fahrzeugs eingetreten ist, kleiner als der vorgegebene Fahrpedalschwellenwert ist.

In einer zweckmäßigen Ausführungsform des erfindungsgemäßen Verfahrens und der erfindungsgemäßen Vorrichtung ist es vorgesehen, dass eine Übersteuersituation erkannt wird, wenn folgende Bedingungen erfüllt sind:

- Die Fahrzeuggeschwindigkeit ist größer als ein vorgegebener Schwellenwert,
- das Vorzeichen des Lenkwinkels an dem lenkbaren Rad des Fahrzeugs entspricht dem Vorzeichen einer Differenz $\dot{\psi}-\dot{\psi}_{Soll}$ zwischen der gemessenen Gierrate $\dot{\psi}$ des Fahrzeugs und einer in einem Fahrzeugreferenzmodell ermittelten Soll-Gierrate $\dot{\psi}_{Soll}$ und
- der Betrag der Differenz $\dot{\psi}-\dot{\psi}_{Soll}$ zwischen der gemessenen Gierrate $\dot{\psi}$ des Fahrzeugs und der in dem Fahrzeugreferenzmodell ermittelten Soll-Gierrate $\dot{\psi}_{Soll}$ ist größer als ein vorgegebener Schwellenwert.

In einer weiteren vorteilhaften Ausführungsform des erfindungsgemäßen Verfahrens und der erfindungsgemäßen Vorrichtung ist es vorgesehen, dass der Sperrgrad der Differenzialsperre mittels der Regeleinheit in Abhängigkeit von einer Differenz zwischen Raddrehzahlen von Antriebsrädern des Fahrzeugs ermittelt wird.

Weiterhin ist es in einer vorteilhaften Ausführungsform des erfindungsgemäßen Verfahrens und der erfindungsgemäßen Vorrichtung vorgesehen, dass der Sperrgrad der Differenzialsperre mittels der Regeleinheit in Abhängigkeit von einer Differenz zwischen einer gemessenen Gierrate des Fahrzeugs und einer in einem Fahrzeugreferenzmodell anhand eines von dem Fahrer eingestellten Lenkwinkels an dem lenkbaren Rad des Fahrzeugs und einer von dem Fahrer des Fahrzeugs eingestellten Fahrzeuggeschwindigkeit ermittelten Soll-Gierrate bestimmt wird.

In einer noch weiteren vorteilhaften Ausführungsform des erfindungsgemäßen Verfahrens und der erfindungsgemäßen Vorrichtung ist es vorgesehen, dass die Regeleinheit in einem Steuergerät enthalten ist, wobei ein Einstellen des in der Regeleinheit ermittelten Soll-Sperrgrads in der Differenzialsperre mittels der Bewertungseinheit blockierbar ist, wodurch ein Sperrgrad von Null in der elektronisch steuerbaren Differenzialsperre einstellbar ist.

Vorzugsweise ist es in einer vorteilhaften Ausführungsform des erfindungsgemäßen Verfahrens und der erfindungsgemäßen Vorrichtung vorgesehen, dass die Bewertungseinheit ein Bestandteil eines Systems zur Durchführung eines elektronischen Stabilitätsprogramms ist.

Ferner ist es in einer vorteilhaften Ausführungsform des erfindungsgemäßen Verfahrens und der erfindungsgemäßen Vorrichtung vorgesehen, dass die Regeleinheit und die Bewertungseinheit Bestandteil eines Systems zur Durchführung eines elektronischen Stabilitätsprogramms sind.

Weitere Vorteile, Besonderheiten und zweckmäßige Weiterbildungen der Erfindung ergeben sich aus den Unteransprüchen und der nachfolgenden Darstellung bevorzugter Ausführungsformen der Erfindung anhand der Figuren.

Von den Figuren zeigt

Fig. 1 ein Blockschaltbild mit einer Vorrichtung zur Ansteu- erung einer elektronischen Differenzialsperre,

Fig. 2 ein Blockschaltbild eines ESP-Systems mit einem in- tegrierten Modul zur Ansteuerung einer elektronischen Differenzialsperre,

Fig. 3 eine schematische Darstellung eines Fahrzeugs, in welcher Fahrzustandsgrößen des Fahrzeugs veranschaulicht sind und

Fig. 4 ein Zustandsdiagramm, in dem die Ansteuerung der e- lektronischen Differenzialsperre verdeutlicht ist.

Die Erfindung bezieht sich auf ein Fahrzeug 101, bei dem es sich beispielsweise um ein zweiachsiges, vierrädriges Kraftfahrzeug handelt, das von einem Antriebsmotor 102 angetrieben wird, der ein Drehmoment erzeugt, welches auf eine der Achsen, vorzugsweise auf die Hinterachse des Fahrzeugs 101, übertragen wird. Durch eine Betätigung eines Fahrpedals fordert der Fahrer des Fahrzeugs 101 dabei ein bestimmtes Antriebsmoment von dem Antriebsmotor 102 des Fahrzeugs 101 an.

Die angetriebenen Räder an der Antriebsachse sind durch ein elektronisch steuerbares Sperrdifferenzial miteinander verbunden. Hierbei handelt es sich um ein Differenzialgetriebe, das mittels einer elektronisch ansteuerbaren Differenzialsperre 103 gesperrt werden kann, die im Folgenden kurz als Differenzialsperre 103 bezeichnet wird. Der Sperrgrad der Differenzialsperre, deren Sperrwirkung beispielsweise mittels einer elektronisch steuerbaren Kupplung erzeugt wird, ist dabei vorzugsweise stufenlos einstellbar.

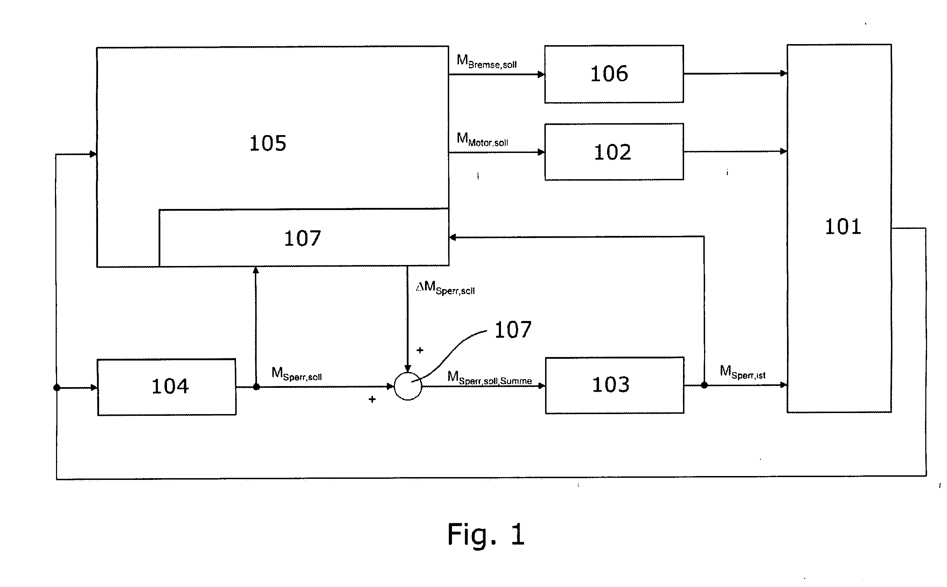

Bei einer Ausführungsform der Erfindung, die in Figur 1 anhand eines Blockschaltbildes veranschaulicht wird, wird der Sperrgrad der Differenzialsperre 103 insbesondere durch ein Steuergerät 104 ermittelt, welches eine elektronische Regeleinheit zum Ermitteln des Soll-Sperrgrades enthält. Dabei wird beispielhaft davon ausgegangen, dass der Soll-Sperrgrad in dem Steuergerät 104 in Form eines Soll-Sperrmoments $M_{Sperr,soll}$ der die Sperrwirkung erzeugenden Kupplung bestimmt wird. Es kann jedoch gleichfalls vorgesehen sein, dass anstelle des Soll-Sperrmoments $M_{Sperr,soll}$ ein Soll-Sperrgrad der Differenzialsperre 103 oder eine Soll-Steifigkeit des Differenzialgetriebes bestimmt wird. Das in der Differenzialsperre 103 vorliegende Sperrmoment wird in der Figur 1 mit $M_{Sperr,ist}$ bezeichnet.

Die Regeleinheit des Steuergerätes 104 ist dabei in einer dem Fachmann an sich bekannten Art ausgeführt. Beispielsweise ermittelt die elektronische Regeleinheit das Soll-Sperrmoment $M_{Sperr,soll}$ so, dass eine Drehzahldifferenz der Antriebsräder einer geschwindigkeitsabhängigen Soll-Drehzahldifferenz nachgeregelt wird, wie es in der eingangs bereits erwähnten Patentschrift DD 294 078 A5 beschrieben ist. Die Raddrehzahldifferenz wird dabei aus den Raddrehzahlen der Antriebsräder ermittelt, die mittels eines Raddrehzahlsensors erfasst werden.

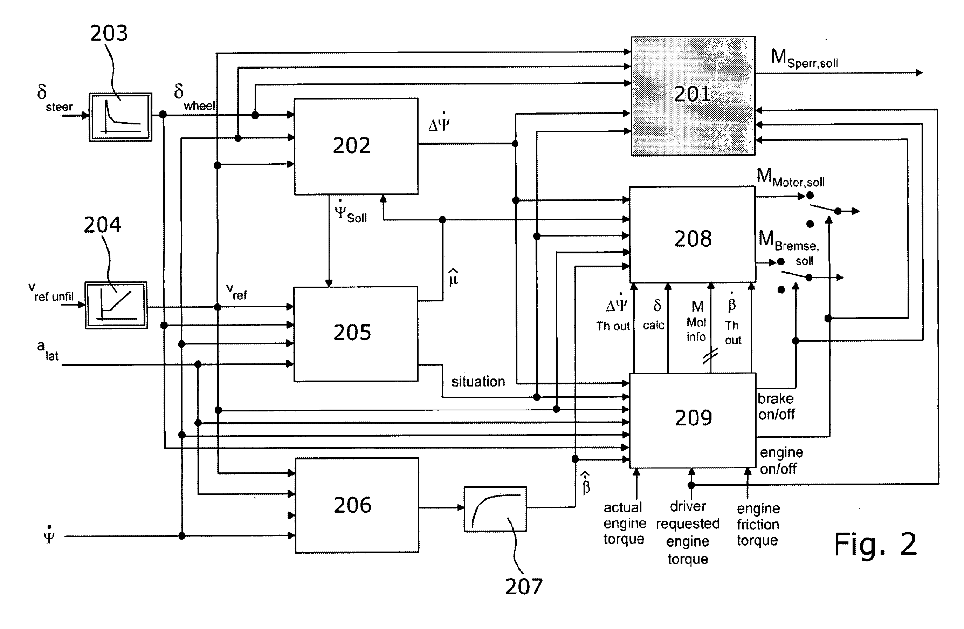

Ferner wird davon ausgegangen, dass das Fahrzeug 101 über ein System 105 zur Durchführung eines elektronischen Stabilitätsprogramms verfügt, welches im Folgenden als ESP-System 105 (ESP: Elektronisches Stabilitätsprogramm) bezeichnet wird. Zur Stabilisierung des Fahrzeugs 101 wird durch das ESP-System 105 insbesondere der Antriebsmotor 102 sowie eine fremdansteuerbare Bremsanlage 106 des Fahrzeugs 101 angesteuert. Das ESP-System verfügt dabei über ein Bewertungsmodul 107 zur Ansteuerung der Differenzialsperre 103, das eine Bewertungseinheit enthält, mittels welcher das Einstellen des in dem Steuergerät 104 ermittelten Soll-Sperrmoments $M_{Sperr,soll}$ in der Differenzialsperre 103 freigeschaltet bzw. blockiert wird. Dazu wird in dem Bewertungsmodul 107 ein Zusatzsperrmoment $\Delta M_{Sperr,soll}$ ermittelt, welches entweder den Wert 0 oder den Wert $-M_{Sperr,soll}$ annimmt. An der Summationsstelle 108 wird ein Summen-Soll-Sperrmoment $M_{Sperr,soll,Summe} = M_{Sperr,soll} + \Delta M_{Sperr,soll}$ gebildet, welches bei einem Wert von $\Delta M_{Sperr,soll}=0$ dem in dem Steuergerät 104 ermittelten Soll-Sperrmoment $M_{Sperr,soll}$ entspricht, so dass dieses in der Differenzialsperre 103 eingestellt wird, und welches bei einem Wert von $\Delta M_{Sperr,soll} =-M_{Sperr,soll}$ den Wert 0 annimmt, so dass ein Sperrgrad von Null in der Differenzialsperre 103 eingestellt wird. Im Übrigen ist das ESP-System 105 in einer dem Fachmann an sich bekannten Art ausgeführt. Es wird im Folgenden anhand von Figur 2 im Zusammenhang mit einer weiteren Ausführungsform der Erfindung näher beschrieben.

Bei der weiteren Ausführungsform der Erfindung, die in der Figur 2 anhand eines Blockschaltbilds veranschaulicht wird, ist es vorgesehen, dass ein ESP-System ein Steuerungsmodul 201 zur Ansteuerung der Differenzialsperre 103 enthält, in dem ein Soll-Sperrmoment $M_{Sperr,soll}$ ermittelt wird, welches direkt in der Differenzialsperre 103 eingestellt wird.

Wie in der Figur 2 dargestellt, weist das ESP-System im Übrigen insbesondere ein Modul 202 auf, in dem anhand eines Fahrzeugreferenzmodells eine Sollgierrate $\dot{\psi}_{Soll}$ bzw. eine Gierratenabweichung $\Delta\dot{\psi} = \dot{\psi} - \dot{\psi}_{Soll}$ zwischen einer mittels eines Gierratensensors erfassten Ist-Gierrate $\dot{\psi}$ des Fahrzugs 101 und der Soll-Gierrate $\dot{\psi}_{Soll}$ berechnet wird. Vorzugsweise wird die Sollgierrate dabei in dem Modul 202 aus dem von dem Fahrer eingestellten Lenkwinkel $\delta_{wheel}$ der lenkbaren Räder 101 des Fahrzeugs sowie anhand einer von dem Fahrer eingestellten Fahrzeugreferenzgeschwindigkeit $v_{ref}$ und anhand eines Fahrzeugreferenzmodells berechnet, bei dem es sich beispielsweise um das bekannte lineare Einspurmodell handelt. Der Lenkwinkel $\delta_{wheel}$ wird dabei in dem Block 203 aus dem Lenkwinkel $\delta_{steer}$ ermittelt, welchen der Fahrer an einer Lenkvorrichtung des Fahrzeugs 101 einstellt und der mittels eines Lenkwinkelsensors gemessen wird. Die Fahrzeugreferenzgeschwindigkeit $v_{ref}$ wird in dem Block 204 aus einer ungefilterten Referenzgeschwindigkeit $v_{ref,unfil}$ ermittelt, die aus den Signalen von Raddrehzahlsensoren bestimmt wird.

In einer vorteilhaften Ausführungsform wird zudem eine Begrenzung der Soll-Gierrate $\dot{\psi}_{Soll}$ auf einen Maximalwert vorgenommen, der in Abhängigkeit von der Fahrzeugreferenzgeschwindigkeit $v_{ref}$, der aktuellen, aus der Fahrzeugreferenzgeschwindigkeit ermittelten Beschleunigung sowie einem Schätzwert $\hat{\mu}$ des aktuellen Fahrbahnreibwerts ermittelt wird, wie es beispielsweise in der deutschen Offenlegungsschrift DE 195 15 051 A1 beschrieben ist, auf die hiermit im Zusammenhang mit dem ESP-System Bezug genommen wird.

Der Schätzwert $\hat{\mu}$ wird in dem Modul 205 beispielsweise auf eine in der deutschen Offenlegungsschrift DE 195 15 051 A1 beschriebene Weise aus der mittels eines Querbeschleunigungssensors gemessenen Querbeschleunigung $a_{lat}$ des Fahrzeugs 101 sowie der beispielsweise aus den Signalen der Raddrehzahlsensoren bzw. der Fahrzeugreferenzgeschwindigkeit bestimmten Längsbeschleunigung des Fahrzeugs 101 berechnet. Ferner wird in dem Modul 205 eine Fahrsituationserkennung vorgenommen. Im Rahmen der Fahrsituationserkennung wird dabei beispielsweise ermittelt, ob sich das Fahrzeug 101 in einer Geradeausfahrt, in einer Kurvenfahrt, in einer Vorwärts-oder Rückwärtsfahrt oder im Stillstand befindet, wie dies ebenfalls in der deutschen Offenlegungsschrift DE 195 15 051 A1 beschrieben ist. Die dabei in dem Modul 205 verwendeten Eingangsgrößen sind die Istgierrate $\dot{\psi}$, die mittels eines Querbeschleunigungssensors gemessene Querbeschleunigung $a_{lat}$, die Fahrzeugreferenzgeschwindigkeit $v_{ref}$, sowie der Lenkwinkel $\delta_{wheel}$ an den lenkbaren Rädern.

Darüber hinaus werden in dem Modul 205 des ESP-Systems Übersteuersituationen und Untersteuersituation anhand der genannten Eingangsgrößen erkannt.

Eine Übersteuersituation wird dabei beispielsweise dann erkannt, wenn die Fahrzeugreferenzgeschwindigkeit größer als ein vorgegebener Schwellenwert ist, wenn das Vorzeichen des Lenkwinkels $\delta_{wheel}$ an den lenkbaren Rädern des Fahrzeugs 101 dem Vorzeichen der Gierratenabweichung $\Delta\dot{\psi} = \dot{\psi} - \dot{\psi}_{soll}$ entspricht und wenn der Betrag der Gierratenabweichung $\Delta\dot{\psi} = \dot{\psi} - \dot{\psi}_{soll}$ größer als ein vorgegebener Schwellenwert ist.

Zur Erkennung einer Untersteuersituation ist es vorgesehen, einen Lenkwinkel $\delta_{calc}$ zu berechnen für den gilt:

$$\delta_{calc} = \frac{l\dot{\psi}}{v_{ref}} + K \cdot a_{lat}$$

Bei dem Koeffizienten $K$ handelt es sich dabei um einen vorgegebenen Untersteuerkoeffizienten. Ein Untersteuern des Fahrzeugs 101 wird dabei festgestellt, wenn die Differenz $|\delta_{wheel}| - |\delta_{calc}|$ einen vorgegebenen Schwellenwert überschreitet.

Ferner verfügt das ESP-System über ein Modul 206, in dem ein Schätzwert $\hat{\dot{\beta}}$ für die Schwimmwinkelgeschwindigkeit bestimmt wird. Dabei wird die Schwimmwinkelgeschwindigkeit vorzugsweise anhand der Ist-Gierrate $\dot{\psi}$, der Querbeschleunigung $a_{lat}$ sowie der Fahrzeugreferenzgeschwindigkeit $v_{ref}$ ermittelt, wie es in der deutschen Offenlegungsschrift DE 195 15 015 A1 beschrieben ist. Nach der Berechnung durchläuft der ermittelte Wert dabei eine Filter in dem Block 207.

Die in dem Modul 202 ermittelte Gierratenabweichung $\Delta\dot{\psi}$, der in dem Modul 205 ermittelte Schätzwert $\hat{\mu}$ für den Fahrbahnreibwert, die in demselben Modul ermittelten Ergebnisse der Fahrsituationserkennung, die Fahrzeugreferenzgeschwindigkeit $v_{ref}$, sowie der in dem Modul 206 ermittelte Schätzwert $\hat{\dot{\beta}}$ für die Schwimmwinkelgeschwindigkeit dienen als Eingangsgrößen für das Regelungsmodul 208 des ESP-Systems.

Das Regelungsmodul 208 enthält einen dem Fachmann an sich bekannten Fahrdynamikregler, mit dem ein Giermoment bestimmt wird, welches die Fahrstabilität des Fahrzeugs 101 erhöht und insbesondere einem Untersteuern oder einem Übersteuern des Fahrzeugs 101 entgegenwirkt. Der Fahrdynamikregler enthält dabei einen beispielsweise als Proportional-Differenzial-Regler ausgeführten Gierratenregler, dessen Reglerparameter adaptiv an ermittelte Größen, wie beispielsweise die Fahrzeuggeschwindigkeit $v_{ref}$ oder den vorliegenden Fahrbahnreibwert $\hat{\mu}$ sowie an die Ergebnisse der Fahrsituationserkennung angepasst werden können. Als Regeldifferenz wird dem Regler dabei die Gierratenabweichung $\Delta\dot{\psi}$ zugeführt. Als Stellgröße berechnet der Regler ein Giermoment, welches dazu geeignet ist, den Fahrzustand des Fahrzeugs 101 zu stabilisieren, bzw. die Gierratenabweichung $\Delta\dot{\psi}$ zu verringern. Darüber hinaus enthält das Regelungsmodul 208 einen Schwimmwinkelregler, in dem in Abhängigkeit von dem aus dem Schätzwert $\hat{\dot{\beta}}$ der Schwimmwinkelgeschwindigkeit berechneten Schwimmwinkel des Fahrzeugs 101 und/oder in Abhängigkeit von dem Schätzwert $\hat{\dot{\beta}}$ der Schwimmwinkelgeschwindigkeit selbst ein weiteres Giermoment berechnet wird, welches mit dem in dem Gierratenregler ermittelten Giermoment arbitriert wird.

Eine Verteilungslogik in dem Regelungsmodul 208 bestimmt aus dem in dieser Weise ermittelten Giermoment radindividuelle Bremsmomente $M_{Brems,soll}$, um das ermittelte Giermoment in dem Fachmann bekannter Weise durch ein gezieltes Abbremsen einzelner Räder des Fahrzeugs 101 zu erzeugen. In einer Übersteuersituation ist es dabei in der Regel vorgesehen, das kurvenäußere Vorderrad des Fahrzeugs 101 durch ein ermitteltes Bremsmoment $M_{Brems,soll}$ abzubremsen. In einer Untersteuersituation wird üblicherweise das kurveninnere Hinterrad des Fahrzeugs 101 durch ein ermitteltes Bremsmoment $M_{Brems,soll}$ abgebremst, um den Fahrzustand des Fahrzeugs 101 zu stabilisieren. Zudem wird in dem Regelungsmodul 208 ein Motormoment $M_{Motor,soll}$ ermittelt, welches an eine Motorsteuerung übertragen und mittels der Motorsteuerung in dem Antriebsmotor des Fahrzeugs 101 eingestellt wird, um die Stabilität des Fahrzustandes des Fahrzeugs 101 zu verbessern.

Die Bremsmomente $M_{Brems,soll}$ und das Motormoment $M_{Motor,soll}$ werden in dem Reglungsmodul 208 bei der in der Figur 2 dargestellten Ausführungsform des ESP-Systems fortlaufend berechnet. Die Freischaltung dieser Momente, die zu einem Einstellen der Bremsmomente $M_{Brems,soll}$ an den Radbremsen des Fahrzeugs 101, sowie zu einem Einstellen des Motormoments $M_{Motor,soll}$ in dem Antriebsmotor des Fahrzeugs 101 führt, wird, wie in der Figur 2 dargestellt, mittels eines Aktivierungsmoduls 209 des ESP-Systems vorgenommen.

In dem Aktivierungsmodul 209 wird eine Bewertung der erkannten Fahrsituation anhand der in der Figur 2 dargestellten Eingangsgrößen vorgenommen. Insbesondere wird die Fahrsituation dabei daraufhin bewertet, ob ein Bremseneingriff oder ein Motoreingriff vorgenommen werden soll. Dazu werden in dem Aktivierungsmodul 209 Vergleiche zwischen den erfassten und ermittelten Fahrzustandsgrößen und vorgegebenen Aktivierungsschwellenwerten durchgeführt, um zu ermitteln, ob ein Bremsen- oder Motoreingriff in einer in dem Modul 205 ermittelten Fahrsituation, insbesondere in einer Über- oder Untersteuersituation, durchgeführt werden soll.

Ferner wird ermittelt, wann ein Bremsen- oder Motor-Eingriff beendet werden soll, wozu Vergleiche zwischen den erfassten und ermittelten Fahrzustandsgrößen und vorgegebenen Austrittsschwellenwerten durchgeführt werden. Darüber hinaus wird auf der Basis des vorliegenden Motormoments (actual engine torque) des Antriebsmotors 102, dem durch den Fahrer angeforderten Motormoment (driver requested engine torque) sowie dem Reibmoment des Motors (engine friction torque) bestimmt, ob und in welcher Weise die Bremsen- und Motoreingriffe vorgenommen werden sollen.

Als Ausgangssignale des Aktivierungsmoduls 209 ergeben sich ein Ausgangssignal brake on/off, mit dem das Einstellen der in dem Regelungsmodul 208 ermittelten Bremsmomente $M_{Brems,soll}$ freigeschaltet bzw. blockiert wird, sowie ein Ausgangssignal engine on/off, mit dem das Einstellen des in dem Regelungsmodul 208 ermittelte Motormoments $M_{Motor,soll}$ freigeschaltet bzw. blockiert wird. Als weitere Ausgangssignale des Aktivierungsmoduls 209 ergeben sich ein Austrittschwellenwert $\Delta\dot{\psi}_{th,out}$ für die Gierratenabweichung $\Delta\dot{\psi}$ und ein Austrittschwellenwert $\dot{\beta}_{Th,out}$ für die Schwimmwinkelgeschwindigkeit $\dot{\beta}$, sowie der Lenkwinkel $\delta_{calc}$ und eine das Motormoment des Antriebsmotors 102 repräsentierende Größe $M_{Mot,info}$, welche ebenfalls in dem Regelungsmodul 208 berücksichtigt werden.

Mittels des Aktivierungsmoduls 209 werden somit insbesondere eine ESP-Übersteuerfunktion und eine ESP-Untersteuerfunktion aktiviert, bei denen in einer Übersteuersituation Bremseneingriffe bzw. in einer Untersteuersituation Bremsen- und Motoreingriffe zur Stabilisierung des Fahrzeugs 101 vorgenommen werden.

Insoweit entspricht das in der Figur 2 dargestellte ESP-System mit den Blöcken 202 bis 209 dem ESP-System 105, bei der in der Figur 1 dargestellten Ausführungsform der Erfindung. Zusätzlich zu den Blöcken 202 bis 209 enthält das ESP-System 104 bei der in der Figur 1 dargestellten Ausführungsform der Erfindung das bereits beschriebene Bewertungsmodul 107, welchem zusätzlich zu dem in dem Steuergerät 104 ermittelte Soll-Sperrmoment $M_{Sperr,soll}$ der Lenkwinkel $\delta_{wheel}$ an den lenkbaren Rädern des Fahrzeugs 101, die gemessene Gierrate $\dot{\psi}$ des Fahrzeugs 101, die Ergebnisse der in dem ESP-System 104 durchgeführten Fahrsituationserkennung sowie die Ausgangssignale brake on/off und engine on/off als Eingangssignale zugeführt werden.

Bei der in der Figur 2 dargestellten Ausführungsform wird die Steuerung der Differenzialsperre 103 vollständig durch das ESP-System durchgeführt. Dazu enthält das ESP-System, wie in der Figur 2 dargestellt, das Steuerungsmodul 201, in dem ein Soll-Sperrmoment $M_{Sperr,soll}$ der Differenzialsperre 103 bestimmt wird. Die Funktionen des Steuergerätes 104 und des Bewertungsmoduls 107, bei in der Figur 1 dargestellten Ausführungsform der Erfindung werden bei der in der Figur 2 dargestellten Ausführungsform der Erfindung durch das Steuerungsmodul 201 ausgeführt. Dieses kann dabei ebenfalls eine Regeleinheit enthalten, in der das Soll-Sperrmoment $M_{Sperr,soll}$ in Abhängigkeit von der Raddrehzahldifferenz der Antriebsräder des Fahrzeugs 101 ermittelt wird. Vorzugsweise enthält das Steuerungsmodul 201 jedoch einen weiteren Gierratenregler, der in Abhängigkeit von der Gierratenabweichung $\Delta\dot{\psi}$, welche die Regeldifferenz für diesen Regler darstellt, ein Soll-Sperrmoment $M_{Sperr,soll}$ der Differenzialsperre 103 ermittelt. Auf diese Weise kann in bestimmten Fahrsituationen durch eine Ansteuerung der Differenzialsperre 103 ein Giermoment erzeugt werden, welches die Gierratenabweichung verringert und somit die Fahrstabilität des Fahrzeugs 101 erhöht. Dabei ist es vorgesehen, dass in dem Steuerungsmodul 201 fortwährend ein Soll-Sperrmoment $M_{Sperr,soll}$ berechnet wird, und eine Bewertungseinheit des Steuerungsmoduls 201 das Einstellen des Soll-Sperrmoments $M_{Sperr,soll}$ in Abhängigkeit von der vorliegenden Fahrsituation freischaltet oder blockiert, wobei bei einer Blockierung ein Sperrgrad von Null in der Differenzialsperre 103 eingestellt wird.

Die im Rahmen der Erfindung vorgesehene Strategie zur Ansteuerung der Differenzialsperre 103, die in beiden dargestellten Ausführungsformen der Erfindung in ähnlicher Weise vorgenommen wird, wird nun im Folgenden erläutert:

Die vorgesehene Strategie basiert auf der Feststellung, dass die Stabilität des Fahrzustandes des Fahrzeugs 101 in bestimmten Übersteuersituationen sowie in Untersteuersituationen dadurch verbessert werden kann, dass in der Differenzialsperre 103 ein Sperrgrad von Null eingestellt wird, während die Stabilität des Fahrzustandes in anderen Übersteuersituationen durch das Einstellen eines von Null verschiedenen Sperrgrades in der Differenzialsperre 103 erhöht werden kann.

Dabei hat sich gezeigt, dass in Übersteuersteuersituationen, in denen von dem Fahrer während der Fahrt durch eine Kurve ein hohes Antriebsmoment des Antriebsmotors 102 mittels des Fahrpedals angefordert wird, um das Fahrzeugs 101 zu beschleunigen, ein Sperrgrad von Null in der elektronischen Differenzialsperre 103 einzustellen ist.

In einer derartigen Fahrsituation, auf die im Folgenden auch als Situation 1 Bezug genommen wird, kommt es aufgrund der während der Kurvenfahrt auftretenden Fliehkräfte zu einer Verringerung der Radlast des kurveninneren Antriebsrades, wodurch sich der Radschlupf an diesem Antriebsrad erhöht bzw. das Rad durchzudrehen beginnt und somit die an diesem Rad bewirkte Seitenführungskraft reduziert wird. In der Folge muss der weitaus größere Anteil der Seitenführungskraft an der Antriebsachse an dem kurvenäußeren Rad aufgebracht werden. Bei offener Differenzialsperre 103, d.h. bei Vorliegen eines Sperrgrades von Null in der Differenzialsperre 103, wird die von dem kurvenäußeren Antriebsrad übertragene Antriebskraft auf den Wert begrenzt, welcher von dem kurveninneren Antriebsrad übertragen werden kann, was in diesen Situationen zur Stabilisierung des Fahrzustandes beiträgt. Bei einer Erhöhung des Sperrgrades der Differenzialsperre 103 würde die an dem kurvenäußeren Rad wirkende Antriebskraft erhöht, so dass die Gefahr besteht, dass auch dieses Rad durchzudrehen beginnt, wodurch die an diesem Rad angreifende Seitenführungskraft ebenfalls verringert wird und es in der Folge zu einem Ausbrechen des Fahrzeugs 101 kommen würde. Um dies zu verhindern, ist es vorgesehen, in einer solchen Situation einen Sperrgrad von Null in der Differenzialsperre 103 einzustellen.

Kommt es zu einem Übersteuern des Fahrzeugs 101, während der Fahrer bei einer Kurvenfahrt kein oder nur ein geringes Antriebsmoment mittels des Fahrpedals von dem Antriebsmotor 102 anfordert, d.h. das Fahrzeug 101 nicht in Vorwärtsrichtung beschleunigt wird, so wird bei einem von Null verschiedenen Sperrgrad der Differenzialsperre 103 die Antriebskraft an dem kurvenäußeren Antriebsrad, welches eine höhere Drehzahl aufweist als das kurveninnere Antriebsrad, gegenüber der an dem kurveninneren Antriebsrad wirkenden Antriebskraft verringert. Hierdurch wird ein Giermoment erzeugt, welches dem Übersteuern des Fahrzeugs 101 entgegen wirkt. In dieser Situation, die im Folgenden auch als Situation 2 bezeichnet wird, ist es daher vorgesehen, dass ein von Null verschiedener Sperrgrad in der Differenzialsperre 103 eingestellt wird, welcher mittels des Steuergerätes 104 oder mittels des in das ESP-Systems integrierten Steuerungsmoduls 201 vorgenommen wird.

In einer Untersteuersituation würde eine Erhöhung des Sperrgrades der Differenzialsperre 103 im Falle, dass der Fahrer kein oder nur ein geringes Motormoment mittels des Fahrpedals von dem Antriebsmotor 102 anfordert, so dass das Fahrzeug 101 nicht in Vorwärtsrichtung beschleunigt wird, ebenfalls das kurvenäußere Antriebsrad abgebremst, wobei das Untersteuern hierdurch jedoch verstärkt wird. Daher ist es vorgesehen, dass in einer solchen Situation, die im Folgenden auch als Situation 3 bezeichnet wird, ein Sperrgrad von Null in der Differenzialsperre 103 eingestellt, bzw. die Differenzialsperre 103 geöffnet wird.

Darüber hinaus wurde festgestellt, dass das Fahrzeug 101 in einer Untersteuersituation, in welcher der Fahrer während der Kurvenfahrt ein hohes Antriebsmoment von dem Antriebsmotor 102 anfordert und das Fahrzeug 101 in Vorwärtsrichtung beschleunigt, nur sehr schwierig bzw. gar nicht durch eine Ansteuerung der elektronischen Differenzialsperre 103 stabilisiert werden kann. Daher ist es in einer solchen Situation, die im Folgenden auch als Situation 4 bezeichnet wird, ebenfalls vorgesehen, einen Sperrgrad von Null in der Differenzialsperre 103 einzustellen bzw. die Differenzialsperre 103 zu öffnen.

Die dargestellte Strategie zur Ansteuerung der elektronischen Differenzialsperre 103 ist zusammenfassend schematisch in der folgenden Tabelle aufgeführt:

|  | Fahrzeug untersteuert | Fahrzeug übersteuert |
| --- | --- | --- |
| Fahrpedal = 0 | Differenzialsperre öffnen (Situation 3) | Geregelte Vorgabe des Sperrgrades (Situation 2) |
| Fahrpedal » 0 | Differenzialsperre öffnen (Situation 4) | Differenzialsperre öffnen (Situation 1) |

Zur Erkennung der zuvor dargestellten Situationen 1 bis 4, werden die Ergebnisse der in dem ESP-System innerhalb des Moduls 205 durchgeführten Erkennung von Übersteuersituationen und Untersteuersituationen herangezogen. Es hat sich jedoch gezeigt, dass eine besonders zuverlässige Erkennung und Bewertung dieser Situationen in Abhängigkeit von einer Schräglaufwinkeldifferenz $\Delta\alpha$ zwischen dem Schräglaufwinkel $\alpha_f$ der Räder an der Vorderachse des Fahrzeugs 101 und den dem Schräglaufwinkel $\alpha_r$ der Räder an der Hinterachse des Fahrzeugs 101 durchgeführt werden kann. Insbesondere die Situation 1, in welcher das Fahrzeug 101 während einer Kurvenfahrt, bei welcher der Fahrer ein hohes Antriebsmoment des Antriebsmotors 102 anfordert, übersteuert, kann dabei besonders zuverlässig insbesondere anhand der Schräglaufwinkeldifferenz $\Delta\alpha$ erkannt werden.

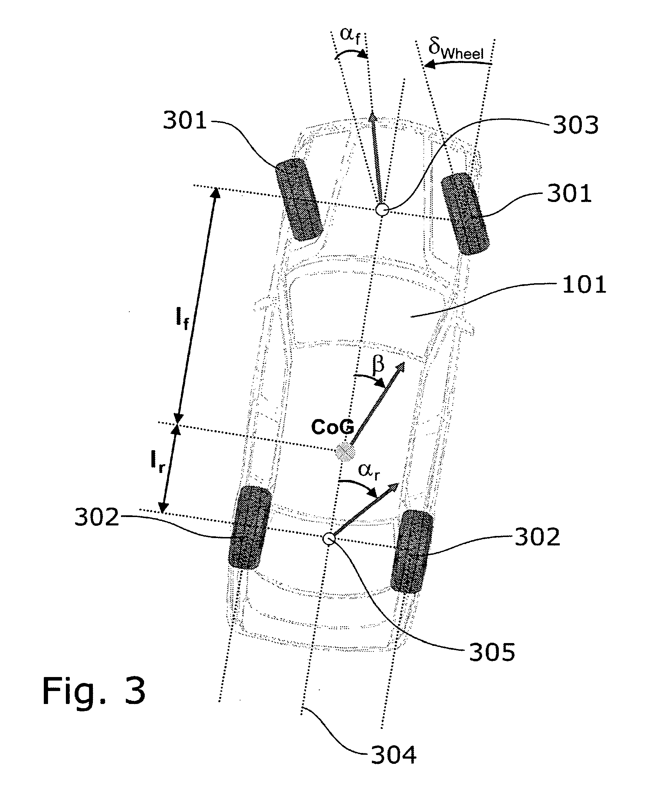

Der Schräglaufwinkel eines Rades ist dabei als derjenige Winkel definiert, der zwischen der Bewegungsrichtung des Radmittelpunktes und der Schnittgeraden der Rad- und der Fahrbahnebene auftritt. Der Schräglaufwinkel $\alpha_f$ der Räder 301 an der Vorderachse, der Schräglaufwinkel $\alpha_r$ der Räder 302 an der Hinterachse des Fahrzeugs 101 sind dabei in der Figur 3 veranschaulicht. Dabei insbesondere die im Rahmen der Erfindung verwendete Orientierung der Winkel, aus denen sich deren Vorzeichen ergibt, aus der Figur 3 entnommen werden.

Unter Verwendung des bekannten linearen Einspurmodells ergibt sich dabei für den Schräglaufwinkel der Räder 301 an der Vorderachse:

$$\alpha_f = -\delta_{wheel} + \beta + \frac{l_f}{v_x}\dot{\psi} \qquad\qquad (1),$$

wobei mit $v_x$ die Komponente der Fahrzeuggeschwindigkeit $v_{ref}$ in Längsrichtung und mit $l_f$ der in der Figur 3 ebenfalls veranschaulichte Abstand zwischen dem Mittelpunkt 303 der Vorderachse und dem Schwerpunkt CoG des Fahrzeugs 101 bezeichnet ist.

Bei dem Winkel $\beta$ handelt es sich um den Schwimmwinkel zwischen der Fahrzeuglängsachse 304 und der Bewegungsrichtung des Fahrzeugs, der ebenfalls in der Figur 3 veranschaulicht ist. Entsprechend ist der Schwimmwinkel $\beta$ durch den Ausdruck

$$\beta = \arctan\frac{v_y}{v_x}$$

gegeben, wobei mit $v_y$ die Komponente der Fahrzeuggeschwindigkeit quer zur Fahrzeuglängsachse 304 bezeichnet ist. Der Schwimmwinkel bzw. die Komponenten $v_x$ und $v_y$ sind dabei einer direkten Messung mittels eines Fahrzeugsensors nicht zugänglich.

Der Schräglaufwinkel $\alpha_r$ der Räder 302 an der Hinterachse des Fahrzeugs 101 ist unter Zugrundelegung des linearen Einspurmodells gegeben durch

$$\alpha_r = \beta - \frac{l_r}{v_x}\dot{\psi} \qquad\qquad (2),$$

wobei mit $l_r$ der Abstand des Hinterachsmittelpunktes von dem Schwerpunkt CoG des Fahrzeugs bezeichnet ist.

Aus den Gleichungen (1) und (2) lässt sich dabei die Schräglaufwinkeldifferenz $\Delta\alpha = \alpha_f - \alpha_r$ ermitteln. Zur Auswertung wird ferner in einer Näherung die Komponente $v_x$ der Fahrzeuggeschwindigkeit durch die Fahrzeugreferenzgeschwindigkeit $v_{ref}$ ersetzt, so dass gilt:

$$\Delta\alpha = -\delta_{wheel} + \frac{l}{v_{ref}}\dot{\psi} \qquad\qquad (3)$$

Der Parameter $l = l_f + l_r$ ist dabei der Radstand des Fahrzeugs 101, d.h. der Abstand zwischen den Mittelpunkten 303, 305 der Vorderachse und der Hinterachse des Fahrzeugs 101. Wie anhand von Gleichung (3) ersichtlich, ist die Schräglaufwinkeldifferenz $\Delta\alpha$ somit aus Größen ermittelbar, die mit Hilfe vom Fahrzeugsensoren erfassbar sind, bzw. bei denen es sich um bauartbedingte Parameter des Fahrzeugs 101 handelt.

In Abhängigkeit von Schwellenwerten für die Schräglaufwinkeldifferenz $\Delta\alpha$ sowie in Abhängigkeit von dem Vorzeichen der Gierrate $\dot{\psi}$ werden im Rahmen der Erfindung anhand der Schräglaufwinkeldifferenz $\Delta\alpha$ Übersteuersituationen sowie Untersteuersituationen erkannt, wobei im Folgenden von einem Schräglauf-Übersteuern die Rede sein wird, wenn anhand der Schräglaufwinkeldifferenz ein Übersteuern des Fahrzeugs 101 festgestellt wird, und wobei im Folgenden von einem Schräglauf-Untersteuern die Rede sein wird, wenn ein Untersteuern des Fahrzeugs 101 anhand der Schräglaufwinkeldifferenz $\Delta\alpha$ festgestellt wird.

In einer bevorzugten Ausführungsform der Erfindung wird dabei ein Schräglauf-Übersteuern erkannt, wenn gilt:

$$(\dot{\psi} > 0 \quad \textbf{und} \quad \Delta\alpha > S_{Ov})$$

oder

$$(\dot{\psi} < 0 \quad \textbf{und} \quad \Delta\alpha < -S_{Ov})$$

Insbesondere wird dabei ein Schräglauf-Übersteuern in einer Linkskurve erkannt, wenn $\dot{\psi}>0$ und $\Delta\alpha>S_{Ov}$ gilt, da das Vorzeichen der Gierrate $\dot{\psi}$ so gewählt ist, dass diese in einer Linkskurve des Fahrzeugs positiv ist, und es wird ein Schräglauf-Übersteuern in einer Rechtskurve erkannt, wenn $\dot{\psi}<0$ und $\Delta\alpha<-S_{Ov}$ gilt, da das Vorzeichen der Gierrate $\dot{\psi}$ so gewählt ist, dass diese in einer Rechtskurve des Fahrzeugs negativ ist.

Der Übersteuerschwellenwert $S_{Ov}$ ist dabei positiv und liegt zwischen 2˚ und 10˚, vorzugsweise bei 5˚. In einer vorteilhaften Ausführungsform der Erfindung kann der Übersteuerschwellenwert $S_{Ov}$ zudem in Abhängigkeit von weiteren Größen, insbesondere in Abhängigkeit von der Fahrzeugreferenzgeschwindigkeit $v_{ref}$ oder in Abhängigkeit von dem Schätzwert $\hat{\mu}$ des Fahrbahnreibwertes ermittelt werden.

Ein Schräglauf-Untersteuern wird in einer bevorzugten Ausführungsform der Erfindung erkannt, wenn gilt:

$$(\dot{\psi}>0 \quad \textbf{und} \quad \Delta\alpha < -S_{Un})$$

oder

$$(\dot{\psi}<0 \quad \textbf{und} \quad \Delta\alpha > S_{Un})$$

Insbesondere wird dabei ein Schräglauf-Untersteuern in einer Linkskurve erkannt, wenn $\dot{\psi}>0$ und $\Delta\alpha<-S_{Un}$ gilt, und es wird ein Schräglauf-Untersteuern in einer Rechtskurve erkannt, wenn $\dot{\psi}<0$ und $\Delta\alpha>S_{Un}$ gilt.

Der Untersteuerschwellenwert $S_{Un}$ ist dabei positiv und liegt zwischen 2˚ und 10˚, vorzugsweise bei 5˚. In einer vorteilhaften Ausführungsform der Erfindung kann der Untersteuerschwellenwert $S_{Ov}$ zudem in Abhängigkeit von weiteren Größen, insbesondere in Abhängigkeit von der Fahrzeuggeschwindigkeit $v_{ref}$ oder in Abhängigkeit von dem Schätzwert $\hat{\mu}$ des Fahrbahnreibwertes ermittelt werden.

Bei der in der Figur 1 dargestellten Ausführungsform der Erfindung, bei der das Soll-Sperrmoment $M_{Sperr,soll}$ der Differenzialsperre 103 in der beschriebenen Weise in dem Steuerungsmodul 104 ermittelt wird, wird dabei eine Bewertung der Fahrsituation, insbesondere die Erkennung eines Schräglaufübersteuerns bzw. eines Schräglaufuntersteuerns, innerhalb des Bewertungsmoduls 107 vorgenommen.

Entsprechend der erkannten und bewerteten Fahrsituation wird dann in Abhängigkeit von dem Soll-Sperrmoment $M_{Sperr,soll}$ ein Zusatz-Sperrmoment $\Delta M_{Sperr,soll}$ bestimmt. Vor dem Eingang der Differenzialsperre 103 wird, wie zuvor erläutert, eine Arbitrierung der Soll-Sperrmomente $M_{Sperr,soll}$ und $\Delta M_{Sperr,soll}$ in Form einer Summenbildung an der Summationsstelle 108 vorgenommen.

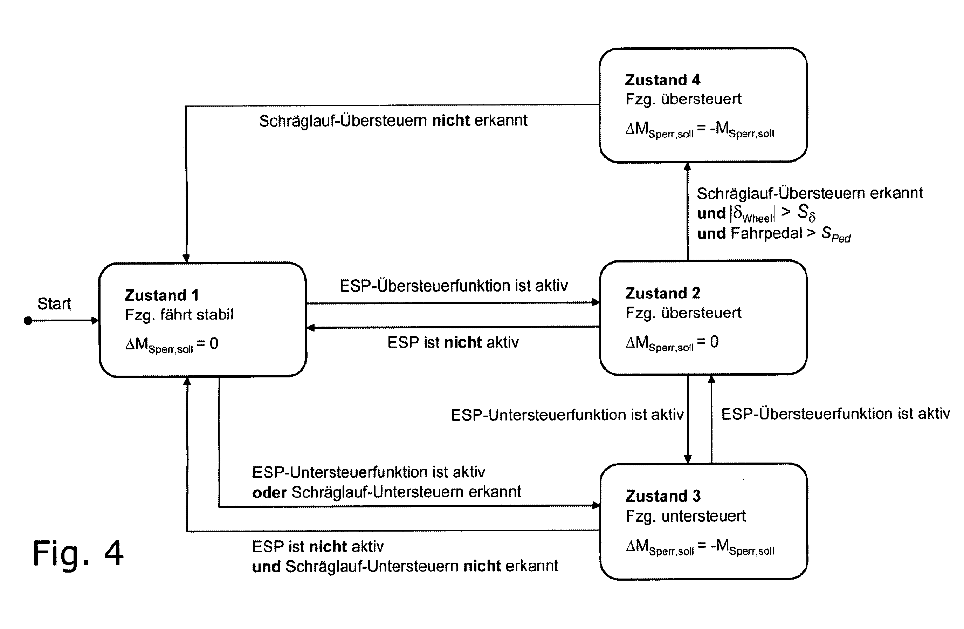

Die Ermittlung des Zusatz-Sperrmoments $\Delta M_{Sperr,soll}$ in dem Bewertungsmodul 107 bei der in der Figur 1 dargestellten Ausführungsform der Erfindung ist in der Figur 4 anhand eines Zustandsdiagramms veranschaulicht.

Insbesondere ist es dabei vorgesehen, dass in dem Bewertungsmodul 107 des ESP-Systems 105 in der beschriebenen Weise ein Schräglauf-Übersteuern sowie ein Schräglauf-Untersteuern erkannt wird. Zur Ansteuerung der Differenzialsperre 103 werden ferner die Ergebnisse der Situationserkennung in dem Modul 205 des ESP-Systems herangezogen, sowie die Ausgangssignale brake on/off sowie engine on/off des Aktivierungsmoduls 209 des ESP-Systems, aus denen insbesondere ermittelbar ist, ob in einer Untersteuersituation und/oder in einer Übersteuersituation ein ESP-Eingriff vorgenommen wird. Ferner wird in dem Bewertungsmodul 107 das Signal driver requested engine torque ausgewertet, welches der Fahrpedalstellung entspricht.

Ein Zustand 1 wird dann angenommen, wenn weder die ESP-Übersteuerfunktion noch die ESP-Untersteuerfunktion aktiv ist und wenn weder ein Schräglauf-Untersteuern noch ein Schräglauf-Übersteuern erkannt wird. In diesem Fall ist der Fahrzustand des Fahrzeugs 101 stabil, und in dem Bewertungsmodul 107 wird ein Zusatz-Sperrmoment von $\Delta M_{Sperr,soll}=0$ berechnet. Somit entspricht das Summen-Soll-Sperrmoment $M_{Sperr,soll,Summe}$ dem in dem Steuergerät 104 ermittelten Soll-Sperrmoment $M_{Sperr,soll}$.

Wird in dem ESP-System 105 ein Übersteuern des Fahrzeugs 101 erkannt und die ESP-Übersteuerfunktion aktiviert, so erfolgt ein Übergang in den Zustand 2. In diesem Falle liegt die Situation 2 vor, in der das Fahrzeug 101 übersteuert, der Fahrer jedoch nur ein geringes Antriebsmoment von dem Motor 102 anfordert. Wie zuvor erläutert, ist es in dieser Situation ebenfalls vorgesehen, dass in der Differenzialsperre 103 das in dem Steuergerät 104 ermittelte Soll-Sperrmoment $M_{Sperr,soll}$ eingestellt wird. Entsprechend wird in dem Bewertungsmodul 107 bei Vorliegen des Zustands 2 ein Zusatz-Sperrmoment von $\Delta M_{Sperr,soll}=0$ ermittelt. Ein Übergang von dem Zustand 2 in den zuvor beschriebenen Zustand 1 erfolgt dann, wenn innerhalb des ESP-Systems 105 erkannt wird, dass die Übersteuersituation beendet ist, und die ESP-Funktion deaktiviert wird.

Ein Übergang von dem Zustand 2 in den Zustand 4 erfolgt, wenn bei aktivierter ESP-Übersteuerfunktion ein Schräglaufwinkel- Übersteuern erkannt wird, und der Betrag des von dem Fahrer an den lenkbaren Rädern eingestellten

Lenkwinkels $\delta_{wheel}$ größer als ein vorgegebener Lenkwinkelschwellenwert $S_\delta$ ist und der Pedalweg, um den Fahrpedal eingetreten ist, größer ist als ein vorgegebener Fahrpedalschwellenwert $S_{ped}$. Dabei kann es, wie bereits erwähnt, vorgesehen sein, dass die Stellung des Fahrpedals, die dem Signal driver requested engine torque entspricht, mit einem Pedalwegsensor gemessen wird, wobei beispielsweise der Winkel des Fahrpedals erfasst, oder der zurückgelegte Anteil des Pedalwegs im Bezug auf die bei vollständig eingetretenem Fahrpedal vorliegende Vollgasstellung ermittelt wird. Der Zustand 4 entspricht dabei der Situation 4, in der das Fahrzeug übersteuert und der Fahrer während der Kurvenfahrt ein hohes Antriebsmoment von dem Antriebsmotor 102 des Fahrzeugs 101 anfordert und das Fahrzeugs 101 beschleunigt. Wie zuvor erläutert, wird in dieser Situation ein Sperrgrad von Null in der Differenzialsperre 103 eingestellt. Dafür wird in dem Bewertungsmodul 107 ein Zusatz-Sperrmoment von $AM_{Sperr,soll}=-M_{Sperr,soll}$ berechnet, so dass sich ein Summen-Soll-Sperrmoment von $M_{Sperr,soll,Summe}=0$ ergibt. Ein Übergang von dem Zustand 4 in den Zustand 1 erfolgt, wenn ein Schräglauf-Übersteuern in dem Bewertungsmodul 107 nicht mehr erkannt wird.

Ausgehend von Zustand 1 erfolgt ferner ein Übergang in einen Zustand 3, wenn in dem ESP-System 105 eine Untersteuersituation erkannt und die ESP-Untersteuerfunktion aktiviert worden ist oder wenn in dem Bewertungsmodul 107 ein Schräglauf- Untersteuern erkannt worden ist. Bei aktivierter ESP-Übersteuerfunktion, d.h. ausgehend von dem Zustand 2, erfolgt ein Übergang in den Zustand 3, wenn in dem ESP-System 105 eine Untersteuersituation erkannt und die ESP-Untersteuerfunktion aktiviert worden ist. Der Zustand 3 entspricht dabei den Situationen 1 und 3, d.h. dem Vorliegen einer Untersteuersituation. Da es auch in dieser Situation, wie zuvor beschrieben, vorgesehen ist, dass ein Sperrgrad von Null in der Differenzialsperre 103 eingestellt wird, wird in dem Zustand 3 ebenfalls ein Zusatz-Sperrmoment von $\Delta M_{Sperr,soll}=-M_{Sperr,soll}$ in dem Bewertungsmodul 107 berechnet, so dass sich ein Summen-Soll-Sperrmoment von $M_{Sperr,soll,Summe}=0$ ergibt und die Differenzialsperre 103 geöffnet wird.

Ein Übergang von dem Zustand 3 in den Zustand 1 erfolgt, wenn innerhalb des ESP-Systems 105 festgestellt wird, dass die Untersteuersituation beendet ist, dass die ESP-Funktion deaktiviert und wenn zusätzlich kein Schräglauf-Untersteuern mehr erkannt wird. Ferner erfolgt ausgehend von dem Zustand 3 ein Übergang in den Zustand 2, wenn in dem ESP-System 105 eine Übersteuersituation erkannt und die ESP-Übersteuerfunktion aktiviert wird.

Bei der in der Figur 2 dargestellten Ausführungsform der Erfindung, bei der die Steuerfunktion zur Ansteuerung der Differenzialsperre vollständig in das ESP-System integriert ist, wird grundsätzlich die gleiche Ansteuerstrategie verfolgt, wie bei der in der Figur 1 dargestellten Ausführungsform der Erfindung, bei der die Steuerungsfunktion zur Ansteuerung der elektronischen Differenzialsperre 103 in einem von dem ESP-System getrennten Steuergerät 104 untergebracht ist.

Insbesondere ist es bei der in der Figur 2 dargestellten Ausführungsform der Erfindung vorgesehen, dass in der Bewertungseinheit des Steuerungsmodul 201 des ESP-Systems in der bereits beschriebenen Weise ein Schräglauf-Übersteuern sowie ein Schräglauf-Untersteuern erkannt wird. Zur Ansteuerung der Differenzialsperre 103 werden ferner die Ergebnisse der Situationserkennung in dem Modul 205 des ESP-Systems herangezogen, sowie die Ausgangssignale brake on/off sowie engine on/off des Aktivierungsmoduls 209 des ESP-Systems, aus denen insbesondere ermittelbar ist, ob in einer Untersteuersituation und/oder in einer Übersteuersituation ein ESP-Eingriff vorgenommen wird. Ferner wird in der Bewertungseinheit des Steuerungsmodul 201 das Signal driver requested engine torque ausgewertet, welches der Fahrpedalstellung entspricht.

Wird dabei in dem Steuergerät 201 ein Schräglaufuntersteuern erkannt, oder wird anhand der Ergebnisse der in dem Modul 205 des ESP-Systems vorgenommenen Situationserkennung festgestellt, dass eine Untersteuersituation vorliegt, so wird in dem Steuerungsmodul 201 ein Soll-Sperrmoment von $M_{Sperr,Soll}=0$ ermittelt, so dass in der Differenzialsperre 103 ein Sperrgrad von Null eingestellt wird.

Wenn in dem Modul 205 des ESP-Systems eine Übersteuersituation festgestellt wird, wird ein von Null verschiedenes Soll-Sperrmoment der Differenzialsperre 103 in dem Steuerungsmodul 201 bzw. in der Regeleinheit des Steuerungsmoduls 201 ermittelt und eingestellt, um ein das Fahrzeug 101 stabilisierendes Giermoment zu erzeugen. Wird zusätzlich festgestellt, dass ein Schräglauf-Übersteuern vorliegt, dass der Lenkwinkel $\delta_{wheel}$ an den lenkbaren Rädern des Fahrzeugs größer als der vorgegebenen Lenkwinkelschwellenwert $S_\delta$ ist und dass der Pedalweg, um den der Fahrer das Fahrpedal eingetreten hat, größer ist als der vorgegebene Fahrpedalschwellenwert $S_{ped}$, so wird ein Soll-Sperrmoment von $M_{Sperr,Soll}=0$ ermittelt und eingestellt, wodurch die Differenzialsperre 103 geöffnet wird.

**Patentansprüche**

1. Verfahren zum Steuern des Sperrgrades einer elektronisch steuerbaren Differenzialsperre in einer angetriebenen Achse eines Fahrzeugs, anhand von Fahrzustandsgrößen, welche wenigstens eine Schräglaufwinkeldifferenz in einer Links- und/oder einer Rechtskurve umfassen, eine Übersteuersituation oder eine Untersteuersituation und anhand von Ausgangssignalen eines ESP-Systems (105) ein ESP-Eingriff erkannt wird und die Fahrpedalstellung ausgewertet wird, die erkannten Situationen daraufhin bewertet werden, ob ein von Null verschiedener Sperrgrad in der Differenzialsperre eingestellt werden soll, und eine Steuerung des Sperrgrades der Differenzialsperre in Abhängigkeit von dem Ergebnis der Bewertung vorgenommen wird.

**2.** Verfahren nach Anspruch 1, **dadurch gekennzeichnet, dass** eine Übersteuersituation oder eine Untersteuersituation anhand einer Schräglaufwinkeldifferenz zwischen den Schräglaufwinkeln von Vorderrädern und Hinterrädern des Fahrzeugs erkannt wird.

**3.** Verfahren nach Anspruch 2, **dadurch gekennzeichnet, dass** die Schräglaufwinkeldifferenz $\Delta\alpha$ aus einem Lenkwinkel $\delta_{wheel}$ eines lenkbaren Rades des Fahrzeugs, einer Geschwindigkeit $v_{ref}$ des Fahrzeugs, einer Gierrate $\dot{\psi}$ des Fahrzeugs und einem Radstand $l$ des Fahrzeugs bestimmt wird, wobei gilt:

$$\Delta\alpha = -\delta_{wheel} + \frac{l}{v_{ref}}\dot{\psi}$$

**4.** Verfahren nach einem der vorangegangenen Ansprüche, **dadurch gekennzeichnet, dass** eine Übersteuersituation, in der ein Sperrgrad von Null in der Differenzialsperre eingestellt wird, erkannt wird, wenn die Schräglaufwinkeldifferenz bei Vorliegen einer positiven Gierrate des Fahrzeugs größer als ein vorgegebener positiver Übersteuerschwellenwert ist oder wenn die Schräglaufwinkeldifferenz bei Vorliegen einer negativen Gierrate des Fahrzeugs kleiner als ein vorgegebener negativer Übersteuerschwellenwert ist.

**5.** Verfahren nach Anspruch 4, **dadurch gekennzeichnet, dass** der positive und der negative Übersteuerschwellenwert den gleichen Betrag aufweisen.

**6.** Verfahren nach Anspruch 4 oder 5, **dadurch gekennzeichnet, dass** eine Übersteuer-situation, in der ein Sperrgrad von Null in der Differenzialsperre eingestellt wird, erkannt wird, wenn zusätzlich ein Pedalweg, um den ein Fahrpedal des Fahrzeugs eingetreten ist, größer ist als ein vorgegebener Fahrpedalschwellenwert.

**7.** Verfahren nach einem der Ansprüche 4 bis 6, **dadurch gekennzeichnet, dass** eine Übersteuersituation, in der ein Sperrgrad von Null in der Differenzialsperre eingestellt wird, erkannt wird, wenn zusätzlich der Betrag des Lenkwinkels an dem lenkbaren Rad des Fahrzeugs größer als ein vorgegebener Lenkwinkelschwellenwert ist.

**8.** Verfahren nach einem der vorangegangenen Ansprüche, **dadurch gekennzeichnet, dass** eine Untersteuersituation, in der ein Sperrgrad von Null in der Differenzialsperre eingestellt wird, erkannt wird, wenn die Schräglaufwinkeldifferenz bei Vorliegen einer positiven Gierrate des Fahrzeugs kleiner als ein vorgegebener negativer Untersteuerschwellenwert ist oder wenn die Schräglaufwinkeldifferenz bei Vorliegen einer negativen Gierrate des Fahrzeugs größer als ein vorgegebener positiver Untersteuerschwellenwert ist.

**9.** Verfahren nach Anspruch 8, **dadurch gekennzeichnet, dass** der positive und der negative Untersteuerschwellenwert den gleichen Betrag aufweisen.

**10.** Verfahren nach einem der vorangegangenen Ansprüche, **dadurch gekennzeichnet, dass** eine Untersteuersituation, in der ein Sperrgrad von Null in der Differenzialsperre eingestellt wird, erkannt wird, wenn ein Betrag des Lenkwinkels an dem lenkbaren Rad des Fahrzeugs um wenigstens einen vorgegebenen Schwellwert größer ist als ein Betrag eines berechneten Lenkwinkels $\delta_{calc}$.

**11.** Verfahren nach Anspruch 10, **dadurch gekennzeichnet, dass** der Lenkwinkel $\delta_{calc}$ aus der Fahrzeuggeschwindigkeit $v_{ref}$, aus einer Querbeschleunigung $a_{lat}$ des Fahrzeugs, aus dem Radstand 1 des Fahrzeugs sowie aus einem Übersteuerkoeffizienten K berechnet wird, wobei gilt:

$$\delta_{calc} = \frac{l\dot{\psi}}{v_{ref}} + K \cdot a_{lat}$$

**12.** Verfahren nach einem der vorangegangenen Ansprüche, **dadurch gekennzeichnet, dass** mittels einer Regeleinheit ein von Null verschiedener Sperrgrad berechnet wird und dass der von Null verschiedene Sperrgrad in der Differenzialsperre eingestellt wird, wenn eine Übersteuersituation erkannt wird und wenn die Schräglaufwinkeldifferenz bei Vorliegen einer positiven Gierrate des Fahrzeugs kleiner als der vorgegebene positive Übersteuerschwellenwert ist.

13. Verfahren nach einem der vorangegangenen Ansprüche, **dadurch gekennzeichnet, dass** mittels der Regeleinheit ein von Null verschiedener Sperrgrad berechnet wird und dass der von Null verschiedene Sperrgrad in der Differenzialsperre eingestellt wird, wenn eine Übersteuersituation erkannt wird und wenn die Schräglaufwinkeldifferenz bei Vorliegen einer negativen Gierrate des Fahrzeugs größer als der vorgegebene negative Übersteuerschwellenwert ist.

14. Verfahren nach Anspruch 12 oder 13, **dadurch gekennzeichnet, dass** ein von Null verschiedener Sperrgrad in der elektronischen Differenzialsperre eingestellt wird, wenn zusätzlich der Betrag des Lenkwinkels an dem lenkbaren Rad des Fahrzeugs kleiner als der vorgegebene Lenkwinkelschwellenwert ist.

15. Verfahren nach einem der Ansprüche 12 bis 14, **dadurch gekennzeichnet, dass** ein von Null verschiedener Sperrgrad der elektronischen Differenzialsperre eingestellt wird, wenn zusätzlich der Pedalweg, um den das Fahrpedal des Fahrzeugs eingetreten ist, kleiner als der vorgegebene Fahrpedalschwellenwert ist.

16. Verfahren nach einem der Ansprüche 12 bis 15, **dadurch gekennzeiehnet, dass** eine Übersteuersituation erkannt wird, wenn folgende Bedingungen erfüllt sind:

- Die Fahrzeuggeschwindigkeit ist größer als ein vorgegebener Schwellenwert,
- das Vorzeichen des Lenkwinkels an dem lenkbaren Rad entspricht dem Vorzeichen einer Differenz $\dot{\psi}-\dot{\psi}_{Soll}$ zwischen der gemessenen Gierrate $\dot{\psi}$ des Fahrzeugs und einer in einem Fahrzeugreferenzmodell ermittelten Soll- Gierrate $\dot{\psi}_{Soll}$ und
- der Betrag der Differenz $\dot{\psi}-\dot{\psi}_{Soll}$ zwischen der gemessenen Gierrate $\dot{\psi}$ des Fahrzeugs und der in einem Fahrzeugreferenzmodell ermittelten Soll-Gierrate $\dot{\psi}_{Soll}$ ist größer als ein vorgegebener Schwellenwert.

17. Verfahren nach einem der Ansprüche 12 bis 16, **dadurch gekennzeiehnet, dass** der Sperrgrad der Differenzialsperre mittels der Regeleinheit in Abhängigkeit einer Differenz zwischen Raddrehzahlen von Antriebsrädern des Fahrzeugs ermittelt wird.

18. Verfahren nach einem der Ansprüche 12 bis 17, **dadurch gekennzeichnet, dass** der Sperrgrad der Differenzialsperre mittels der Regeleinheit in Abhängigkeit von einer Differenz zwischen einer gemessenen Gierrate des Fahrzeugs und einer in einem Fahrzeugreferenzmodell anhand eines von dem Fahrer eingestellten Lenkwinkels an dem lenkbaren Rad des Fahrzeugs und einer von dem Fahrer des Fahrzeugs eingestellten Fahrzeuggeschwindigkeit ermittelten Soll-Gierrate bestimmt wird.

19. Vorrichtung zum Steuern eines Sperrgrades einer elektronisch steuerbaren Differenzialsperre in einer angetriebenen Achse eines Fahrzeugs, umfassend eine Regeleinheit, in der ein Sperrgrad der Differenzialsperre bestimmbar ist, eine Bewertungseinheit, in der eine Fahrsituation des Fahrzeugs erkennbar und daraufhin bewertbar ist, ob ein von Null verschiedener Sperrgrad der Differenzialsperre eingestellt werden soll, wobei die Fahrsituation auf Grundlage einer Schräglaufwinkeldifferenz zur Erkennung einer Übersteuersituation oder einer Untersteuersituation, eines Ausgangssignals eines ESP-Systems (105) zur Erkennung eines ESP-Eingriffs und einer Fahrpedalstellung erkannt wird und wobei mittels der Bewertungseinheit ein in der Regeleinheit ermittelter Sperrgrad einstellbar ist, wenn eine Bewertung der Fahrsituation ergibt, dass ein von Null verschiedener Sperrgrad der Differenzialsperre eingestellt werden soll.

20. Vorrichtung nach Anspruch 19, **dadurch gekennzeichnet, dass** die Regeleineinheit in einem Steuergerät enthalten ist, wobei ein Einstellen des in der Regeleinheit ermittelten Soll-Sperrgrads in der Differenzialsperre mittels der Bewertungseinheit blockierbar ist, wodurch ein Sperrgrad von Null in der elektronisch steuerbaren Differenzialsperre einstellbar ist.

21. Vorrichtung nach Anspruch 19 oder 20, **dadurch gekennzeichnet, dass** die Bewertungseinheit ein Bestandteil eines Systems zur Durchführung eines elektronischen Stabilitätsprogramms ist.

22. Vorrichtung nach einem der Ansprüche 19 bis 21, **dadurch gekennzeichnet, dass** die Regeleinheit und die Bewertungseinheit Bestandteil eines Systems zur Durchführung eines elektronischen Stabilitätsprogramms sind.

**Claims**

1.  Method for controlling the degree of locking of an electronically controllable differential lock in a driven axle of a vehicle, wherein an ESP intervention is detected on the basis of driving state variables which comprise at least one slip angle difference in a left-handed bend and/or a right-handed bend, an oversteering situation or an understeering situation and on the basis of output signals of an ESP system (105), and the accelerator pedal position is evaluated, wherein the detected situations are assessed to determine whether a degree of locking which is different from zero is to be set in the differential lock, and wherein the degree of locking of the differential lock is controlled as a function of the result of the assessment.

2.  Method according to Claim 1, **characterized in that** an oversteering situation or an understeering situation is detected on the basis of a slip angle difference between the slip angles of front wheels and those of rear wheels of the vehicle.

3.  Method according to Claim 2, **characterized in that** the slip angle difference $\Delta\alpha$ is determined from a steering angle $\delta_{wheel}$ of a steerable wheel of the vehicle, a velocity $\upsilon_{ref}$ of the vehicle, a yaw rate $\dot{\psi}$ of the vehicle and a wheel base 1 of the vehicle, wherein the following applies:

$$\Delta\alpha = -\delta_{wheel} + \frac{l}{\upsilon_{ref}}\dot{\psi}$$

4.  Method according to one of the preceding claims, **characterized in that** an oversteering situation in which a degree of locking of zero is set in the differential lock is detected if the slip angle difference when a positive yaw rate of the vehicle is present is greater than a predefined positive oversteering threshold value or if the slip angle difference when a negative yaw rate of the vehicle is present is smaller than a predefined negative oversteering threshold value.

5.  Method according to Claim 4, **characterized in that** the positive and negative oversteering threshold values have the same absolute value.

6.  Method according to Claim 4 or 5, **characterized in that** an oversteering situation in which a degree of locking of zero is set in the differential lock is detected if in addition a pedal travel by which an accelerator pedal of the vehicle is depressed is greater than a predefined accelerator pedal threshold value.

7.  Method according to one of Claims 4 to 6, **characterized in that** an oversteering situation in which a degree of locking of zero is set in the differential lock is detected if in addition the absolute value of the steering angle at the steerable wheel of the vehicle is greater than a predefined steering angle threshold value.

8.  Method according to one of the preceding claims, **characterized in that** an understeering situation in which a degree of locking of zero is set in the differential lock is detected if the slip angle difference when a positive yaw rate of the vehicle is present is smaller than a predefined negative understeering threshold value or if the slip angle difference when a negative yaw rate of the vehicle is present is greater than a predefined positive understeering threshold value.

9.  Method according to Claim 8, **characterized in that** the positive and the negative understeering threshold values have the same absolute value.

10. Method according to one of the preceding claims, **characterized in that** an understeering situation in which a degree of locking of zero is set in the differential lock is detected if an absolute value of the steering angle at the steerable wheel of the vehicle is greater than an absolute value of a calculated steering angle $\delta_{calc}$ by at least a predefined threshold value.

11. Method according to Claim 10, **characterized in that** the steering angle $\delta_{calc}$ is calculated from the vehicle velocity $\upsilon_{ref}$, from a lateral acceleration $\alpha_{lat}$ of the vehicle, from the wheel base 1 of the vehicle and from an oversteering coefficient $K$, wherein the following applies:

$$\delta_{calc} = \frac{l\dot{\psi}}{v_{ref}} + K \cdot a_{lat}$$

12. Method according to one of the preceding claims, **characterized in that** a degree of locking which is different from zero is calculated by means of a control unit, and **in that** the degree of locking which is different from zero is set in the differential lock if an oversteering situation is detected and if the slip angle difference when a positive yaw rate of the vehicle is present is smaller than the predefined positive oversteering threshold value.

13. Method according to one of the preceding claims, **characterized in that** a degree of locking which is different from zero is calculated by means of the control unit, and **in that** the degree of locking which is different from zero is set in the differential lock if an oversteering situation is detected and if the slip angle difference when a negative yaw rate of the vehicle is present is greater than the predefined negative oversteering threshold value.

14. Method according to Claim 12 or 13, **characterized in that** a degree of locking which is different from zero is set in the electronic differential lock if in addition the absolute value of the steering angle at the steerable wheel of the vehicle is smaller than the predefined steering angle threshold value.

15. Method according to one of Claims 12 to 14, **characterized in that** a degree of locking of the electronic differential lock which is different from zero is set if in addition the pedal travel by which the accelerator pedal of the vehicle is depressed is smaller than the predefined accelerator pedal threshold value.

16. Method according to one of Claims 12 to 15, **characterized in that** an oversteering situation is detected if the following conditions are met:

   - the vehicle velocity is higher than a predefined threshold value,
   - the sign of the steering angle at the steerable wheel corresponds to the sign of a difference $\dot{\psi}-\dot{\psi}_{setp}$ between the measured yaw rate $\dot{\psi}$ of the vehicle and a setpoint yaw rate $\dot{\psi}_{setp}$ determined in a vehicle reference model, and
   - the absolute value of the difference $\dot{\psi}-\dot{\psi}_{setp}$ between the measured yaw rate $\dot{\psi}$ of the vehicle and the setpoint yaw rate $\dot{\psi}_{setp}$ determined in a vehicle reference model is greater than a predefined threshold value.

17. Method according to one of Claims 12 to 16, **characterized in that** the degree of locking of the differential lock is determined by means of the control unit as a function of a difference between wheel speeds of driven wheels of the vehicle.

18. Method according to one of Claims 12 to 17, **characterized in that** the degree of locking of the differential lock is determined by means of the control unit as a function of a difference between a measured yaw rate of the vehicle and a setpoint yaw rate determined in a vehicle reference model on the basis of a steering angle set by the driver at the steerable wheel of the vehicle and a vehicle velocity set by the driver of the vehicle.

19. Device for controlling a degree of locking of an electronically controllable differential lock in a driven axle of a vehicle, comprising a control unit in which a degree of locking of the differential lock can be determined, an assessment unit in which a driving situation of the vehicle can be detected and it can subsequently be assessed whether a degree of locking of the differential lock which is different from zero is to be set, wherein the driving situation is detected on the basis of a slip angle difference for detecting an oversteering situation or an understeering situation, an output signal of an ESP system (105) for detecting an ESP intervention and an accelerator pedal position, and wherein a degree of locking determined in the control unit can be set by means of the assessment unit if an assessment of the driving situation reveals that a degree of locking of the differential lock which is different from zero is to be set.

20. Device according to Claim 19, **characterized in that** the control unit is contained in a control device, wherein a setting operation for setting the setpoint degree of locking determined in the control unit in the differential lock can be blocked by means of the assessment unit, as a result of which a degree of locking of zero can be set in the electronically controllable differential lock.

21. Device according to Claim 19 or 20, **characterized in that** the assessment unit is a component of a system for executing an electronic stability program.

**22.** Device according to one of Claims 19 to 21, **characterized in that** the control unit and the assessment unit are components of a system for executing an electronic stability program.

**Revendications**

**1.** Procédé de commande du degré de blocage d'un blocage différentiel à commande électronique de l'essieu moteur d'un véhicule,
dans lequel une situation de survirage ou une situation de sous-virage est détectée à l'aide de grandeurs d'état de roulage qui comprennent au moins une différence entre les angles de déplacement oblique dans une courbe orientée vers la gauche et/ou dans une courbe orientée vers la droite, une intervention ESP étant détectée à l'aide des signaux de sortie d'un système ESP (105) et la position de la pédale d'accélération étant évaluée, et dans lequel on évalue sur les situations détectées si un degré de blocage différent de zéro doit être établi dans le blocage différentiel, la commande du degré de blocage du blocage différentiel étant réalisée en fonction du résultat de l'évaluation.

**2.** Procédé selon la revendication 1, **caractérisé en ce qu'**une situation de survirage ou une situation de sous-virage sont détectées à l'aide d'une différence entre les angles de déplacement oblique des roues avant et des roues arrière du véhicule.

**3.** Procédé selon la revendication 2, **caractérisé en ce que** la différence entre les angles de déplacement oblique $\Delta\alpha$ est déterminée à partir de l'angle de direction $\delta_{wheel}$ d'une roue directrice du véhicule, de la vitesse $V_{ref}$ du véhicule, de la vitesse de lacet $\psi'$ du véhicule et de l'empattement 1 entre les roues du véhicule, par l'équation :

$$\Delta\alpha = -\delta_{wheel} + \frac{l}{v_{ref}}\dot{\psi}$$

**4.** Procédé selon l'une des revendications précédentes, **caractérisé en ce qu'**une situation de survirage dans laquelle un degré de blocage différent de zéro doit être établi dans le blocage différentiel est détectée lorsque la différence entre les angles de déplacement oblique alors que la vitesse de lacet du véhicule est positive est supérieure à une valeur prédéterminée positive de seuil de survirage ou lorsque la différence entre les angles de déplacement oblique alors que la vitesse de lacet du véhicule est négative est inférieure à une valeur négative prédéterminée de seuil de survirage.

**5.** Procédé selon la revendication 4, **caractérisé en ce que** la valeur positive et la valeur négative de seuil de survirage ont la même valeur absolue.

**6.** Procédé selon les revendications 4 ou 5, **caractérisé en ce qu'**une situation de survirage dans laquelle un degré de blocage nul est établi dans le blocage différentiel est détectée si en supplément la course parcourue par la pédale d'accélération du véhicule est supérieure à une valeur de seuil prédéterminée de pédale d'accélération.

**7.** Procédé selon l'une des revendications 4 à 6, **caractérisé en ce qu'**une situation de survirage dans laquelle un degré de blocage nul est établi dans le blocage différentiel est détectée si en supplément la valeur de l'angle de direction de la roue directrice du véhicule est supérieure à une valeur de seuil prédéterminée d'angle de direction.

**8.** Procédé selon l'une des revendications précédentes, **caractérisé en ce qu'**une situation de sous-virage dans laquelle un degré de blocage nul est établi dans le blocage différentiel est détectée lorsque la différence entre les angles de déplacement oblique alors que la vitesse de lacet du véhicule est positive est inférieure à une valeur négative prédéterminée de seuil de sous-virage ou lorsque la différence entre les angles obliques alors que la vitesse de lacet du véhicule est négative est supérieure à une valeur positive prédéterminée de seuil de sous-virage.

**9.** Procédé selon la revendication 8, **caractérisé en ce que** la valeur de seul positive et la valeur de seuil négative de sous-virage ont la même valeur absolue.

**10.** Procédé selon l'une des revendications précédentes, **caractérisé en ce qu'**une situation de sous-virage dans laquelle un degré de blocage nul est établi dans le blocage différentiel est détectée lorsque la valeur de l'angle de direction de la roue directrice du véhicule est supérieure d'au moins une valeur de seuil prédéterminée à la valeur d'un angle de direction $\delta_{calc}$ calculé.

11. Procédé selon la revendication 10, **caractérisé en ce que** l'angle de direction $\delta_{calc}$ est calculé à partir de la vitesse $V_{ref}$ du véhicule, de l'accélération transversale $a_{lat}$ du véhicule, de l'empattement 1 entre les roues du véhicule ainsi que du coefficient K de survirage, par l'équation :

$$\delta_{calc} = \frac{l\dot\psi}{v_{ref}} + K \cdot a_{lat}$$

12. Procédé selon l'une des revendications précédentes, **caractérisé en ce qu'**un degré de blocage différent de zéro est calculé au moyen d'une unité de régulation et **en ce que** le degré de blocage différent de zéro est établi dans le blocage différentiel lorsqu'une situation de survirage est détectée et lorsque la différence entre les angles de déplacement oblique alors que la vitesse de lacet du véhicule est positive est inférieure à une valeur positive prédéterminée du seuil de survirage.

13. Procédé selon l'une des revendications précédentes, **caractérisé en ce qu'**un degré de blocage différent de zéro est calculé au moyen de l'unité de régulation et **en ce que** le degré de blocage différent de zéro est établi dans le blocage différentiel lorsqu'une situation de survirage est détectée et lorsque la différence entre les angles de déplacement oblique alors que la vitesse de lacet du véhicule est négative est supérieure à une valeur négative prédéterminée du seuil de survirage.

14. Procédé selon les revendications 12 ou 13, **caractérisé en ce qu'**un degré de blocage différent de zéro est établi dans le blocage différentiel électronique lorsqu'en supplément, la valeur de l'angle de direction sur la roue directrice du véhicule est inférieure à la valeur prédéterminée du seuil d'angle de direction.

15. Procédé selon l'une des revendications 12 à 14, **caractérisé en ce qu'**un degré de blocage différent de zéro du blocage différentiel électronique est établi lorsqu'en supplément la course parcourue par la pédale d'accélération du véhicule est inférieure à la valeur prédéterminée de seuil de course de pédale.

16. Procédé selon l'une des revendications 12 à 15, **caractérisé en ce qu'**une situation de survirage est détectée lorsque les conditions suivantes sont satisfaites :

- la vitesse du véhicule est supérieure à une valeur de seuil prédéterminée,
- le signe de l'angle de direction sur la roue directrice correspond au signe de la différence $\psi'-\psi'_{soll}$ entre la vitesse de lacet $\psi'$ mesurée sur le véhicule et une vitesse de lacet de consigne $\psi'_{soll}$ déterminée dans un modèle de référence du véhicule et
- la valeur de la différence $\psi'-\psi'_{soll}$ entre la vitesse de lacet $\psi'$ mesurée sur le véhicule et la vitesse de lacet de consigne $\psi'_{soll}$ déterminée dans le modèle de référence du véhicule est supérieure à une valeur de seuil prédéterminée.

17. Procédé selon l'une des revendications 12 à 16, **caractérisé en ce que** le degré de blocage du blocage différentiel est déterminé au moyen de l'unité de régulation en fonction de la différence entre les vitesses de rotation des roues motrices du véhicule.

18. Procédé selon l'une des revendications 12 à 17, **caractérisé en ce que** le degré de blocage du blocage différentiel est déterminé au moyen de l'unité de régulation en fonction de la différence entre la vitesse de lacet mesurée sur le véhicule et une vitesse de lacet de consigne déterminée dans un modèle de référence du véhicule à l'aide de l'angle de direction établi par le conducteur sur la roue directrice du véhicule et de la vitesse du véhicule établie par le conducteur du véhicule.

19. Dispositif de commande du degré de blocage du blocage différentiel à commande électronique de l'essieu moteur d'un véhicule, comprenant une unité de régulation dans laquelle le degré de blocage du blocage différentiel peut être déterminé, une unité d'évaluation dans laquelle la situation de roulage du véhicule peut être détectée avant d'évaluer si un degré de blocage non nul du blocage différentiel doit être établi, la situation de roulage étant détectée sur base de la différence entre les angles de déplacement oblique en vue de détecter une situation de survirage ou une situation de sous-virage, d'un signal délivré par un système ESP (105) pour détecter une intervention ESP et de la position de la pédale d'accélérateur, un degré de blocage pouvant être établi dans l'unité de régulation au moyen de l'unité d'évaluation lorsque l'évaluation de la situation de roulage indique qu'un degré de blocage non nul du blocage différentiel doit être établi.

20. Dispositif selon la revendication 19, **caractérisé en ce que** l'unité de régulation est contenue dans un appareil de commande, l'établissement du degré de blocage de consigne dans le blocage différentiel, déterminé dans l'unité de régulation, pouvant être bloqué au moyen de l'unité d'évaluation, ce qui permet d'établir un degré de blocage nul dans le blocage différentiel à commande électronique.

21. Dispositif selon les revendications 19 ou 20, **caractérisé en ce que** l'unité d'évaluation fait partie d'un système exécutant un programme électronique de stabilité.

22. Dispositif selon l'une des revendications 19 à 21, **caractérisé en ce que** l'unité de régulation et l'unité d'évaluation font partie d'un système exécutant un programme électronique de stabilité.

EP 1 802 481 B1

$M_{Bremse,soll}$

106

$M_{Motor,soll}$

102

105

107

101

$\Delta M_{Sperr,soll}$

107

+

104

$M_{Sperr,soll}$

+

$M_{Sperr,soll,Summe}$

103

$M_{Sperr,ist}$

**Fig. 1**

Fig. 2

EP 1 802 481 B1

Fig. 3

Fig. 4

Start

**Zustand 1**
Fzg. fährt stabil
$\Delta M_{Sperr,soll} = 0$

**Zustand 2**
Fzg. übersteuert
$\Delta M_{Sperr,soll} = 0$

**Zustand 3**
Fzg. untersteuert
$\Delta M_{Sperr,soll} = -M_{Sperr,soll}$

**Zustand 4**
Fzg. übersteuert
$\Delta M_{Sperr,soll} = -M_{Sperr,soll}$

Schräglauf-Übersteuern **nicht** erkannt

Schräglauf-Übersteuern erkannt
**und** $|\delta_{Wheel}| > S_\delta$
**und** Fahrpedal $> S_{Ped}$

ESP-Übersteuerfunktion ist aktiv

ESP ist **nicht** aktiv

ESP-Untersteuerfunktion ist aktiv

ESP-Übersteuerfunktion ist aktiv

ESP-Untersteuerfunktion ist aktiv
**oder** Schräglauf-Untersteuern erkannt

ESP ist **nicht** aktiv
**und** Schräglauf-Untersteuern **nicht** erkannt

EP 1 802 481 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10245035 A1
- DE 19515051 A1
- DD 294078 A5
- DE 19515015 A1